# EUROPÄISCHE PATENTANMELDUNG

(11) **EP 0 708 289 A1**
(43) Veröffentlichungstag der Anmeldung: **24.04.1996**
(21) Anmeldenummer: 95113226.5
(22) Anmeldetag: 23.08.1995
(51) Int. Cl.: F16L 55/16

(54) **Verfahren und Vorrichtung zum Trennen und Verbinden von Rohrleitungen unter Betriebsbedingungen**

(30) Priorität: 23.08.1994 DE 4429874
(71) Anmelder: Wolf, Werner, D-40595 Düsseldorf (DE)
(72) Erfinder: Wolf, Werner, D-40595 Düsseldorf (DE)
(74) Vertreter: Türk, Gille, Hrabal, Leifert

(57) **Zusammenfassung**

Bei einem Verfahren zum Trennen und Verbinden von Rohrleitungen unter Betriebsbedingungen, bei dem eine Rohrleitung (2) an zwei entgegengesetzten Enden, im Bedarfsfalle unter Sauerstoffausschluß, durchtrennt wird, wird über der Trennstelle (46) ein Bypassanschluß (53) hergestellt, woraufhin die Rohrleitung (2) an der Schnittstelle (54) abgedichtet wird. Die Abdichtung (49) ermöglicht den Fluß von Strömungsgut der Rohrleitung (2) zur Bypass-Leitung (53). Die Trennstelle (46) wird anschließend, im Bedarfsfalle unter Sauerstoffausschluß verchlossen. Eine Vorrichtung zur Durchführung des Verfahrens umfaßt einen Schleusenkörper (24) mit einem Schleusenoberteil (7) und zwei Schleusenunterteilen (8,9), welche mit Halbschalen (3-6) verbunden sind. Die Halbschalen (3-6) liegen dicht an der Rohrleitung (2) an. Das Schleusenoberteil (7) weist einen Schleusenkörper (24) mit einer Schleusenkammer (25) auf.

## Beschreibung

Die Erfindung betrifft ein Verfahren zu Trennen und Verbinden von Rohrleitungen unter Betriebsbedingungen und eine Vorrichtung zum Durchführen des Verfahrens.

Es ist bei Rohrleitungen, durch die flüssige oder gasförmige Medien strömen, nötig, Montagearbeiten an diesen durchzuführen, ohne den Materialsstrom in der Rohrleitung zu unterbrechen. Um eine solche Unterbrechung und ein Austreten des Mediums aus der Rohrleitung in die Umgebung zu vermeiden, ist es vor Montagearbeiten, wie Durchtrennen des Rohres, Einfügen einer Verschlußkappe oder eines Anschlußstückes, nötig, an der Rohrleitung eine Bypass-Leitung anzubringen, welche die zur Montage vorgesehene Stelle der Rohrleitung überbrückt. Danach wird die Rohrleitung an der zur Montage vorgesehenen Stelle, hinter dem Bypass-Anschluß, provisorisch verschlossen. Danach kann die Montagearbeit durchgeführt werden. Hiernach ist es wiederum nötig, die Rohrleitung von den provisorischen Verschlußmitteln zu befreien und die Bypass-Leitung zu entfernen.

Bei Arbeiten an Gasrohrleitungen wird das Verschließen der Rohrleitung dadurch ermöglicht, daß im Bereich der vorzunehmenden Arbeiten am jeweils äußeren Ende eine Bohrung in die Rohrleitung eingebracht wird, woraufhin durch die Bohrung ein Schlauch mit einem flexiblen Blasenkörper eingeführt und anschließend mit Druck beaufschlagt wird, wodurch sich die Blase an die Innenwandung der Rohrleitung anlegt und diese verschließt. Durch Ablagerungen und Korrosion an der Innenwandung der Rohrleitung ist die Abdichtung durch die Blase aber keine vollständige, man spricht hierbei eher von einem "kontrollierten Gasaustritt". Es kann also nicht verhindert werden, daß zumindest geringe Mengen an Gas aus der Rohrleitung austreten. Bei explosionsgefährdeten Gasen bedeutet dieser Gasaustritt eine nicht hinnehmbare Gefährdung von Personen. Zu dem macht dieser Gasaustritt das Arbeiten mit Gasmasken erforderlich, was von den Trägern als unangenehm und störend empfunden wird. Ferner kann es bei der Anwendung von Blasen auch nicht immer verhindert werden, daß die Blase selbst platzt oder vom Druckschlauch abreißt, wodurch das in den Leitungen befindliche Gas unkontrolliert entweichen kann. Beim Abriß der Blase vom Druckschlauch wird die Blase darüberhinaus vom Gasstrom mitgerissen und bleibt an einer schwer zu lokalisierenden Stelle der Rohrleitung hängen.

Bei unterirdisch verlegten Rohrleitungen muß bei diesem Verfahren außerdem ein relativ großer Bereich der Rohrleitung freigelegt werden, was zeit- und kostenintensiv ist.

Aufgabe der Erfindung ist es daher, ein Verfahren zum Trennen und Verbindung von Rohrleitungen unter Betriebsbedingungen zu schaffen, das einfach, schnell und preiswert durchzuführen ist.

Eine weitere Aufgabe ist die Schaffung einer Vorrichtung zur Durchführung eines solchen Verfahrens.

Gelöst wird die Aufgabe durch ein Verfahren, das durch die Merkmale des Patentanspruches 1 charakterisiert ist. Vorteilhafterweise findet bei der Durchführung des Verfahrens eine Vorrichtung gemäß Patentanspruch 2 Anwendung. Weitere vorteilhafte Ausgestaltungen der Erfindung sind Gegenstand der Unteransprüche.

Das erfindungsgemäße Verfahren und seine Durchführung wird anhand der Zeichnung erläutert. Es zeigt:
- Fig. 1: eine seitliche Ansicht im Schnitt einer Vorrichtung zur Durchführung des Verfahrens,
- Fig. 2: die seitliche Ansicht im Schnitt einer weiteren Ausführungsform der Vorrichtung zur Durchführung des Verfahrens,
- Fig. 3: den Querschnitt der Vorrichtung zur Durchführung des Verfahrens entlang einer Linie A-A' aus Fig. 2,
- Fig. 4: ein seitlicher Querschnitt einer Absperrscheibe der Vorrichtung zur Durchführung des Verfahrens,
- Fig. 5: die Absperrscheibe aus Fig. 4 von oben, und
- Fig. 6: die Ansicht einer Halbschale der Vorrichtung von vorne,
- Fig. 7: eine Detailansicht aus Fig. 1 und 2,
- Fig. 8: den seitlichen Querschnitt eines Verschlußstückes der Vorrichtung zur Durchführung des Verfahrens.

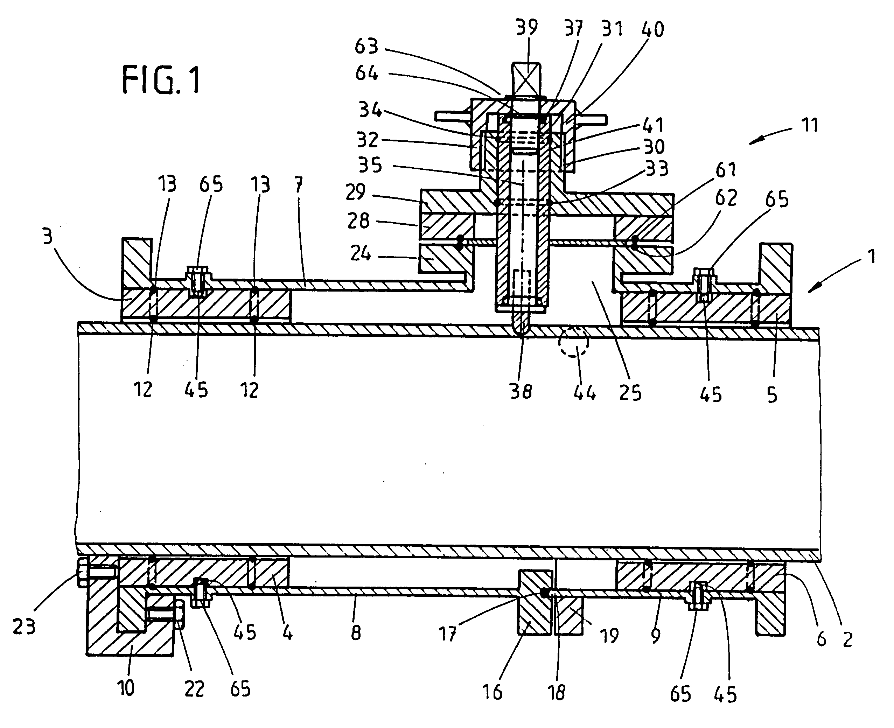

Wie in der Fig. 1 zu entnehmen ist, wird zum Anlegen einer Vorrichtung 1 zur Durchführung des Verfahrens zunächst einmal eine Rohrleitung 2, an der die Montagearbeiten durchgeführt werden sollen, freigelegt. Nach Festlegung der Länge der Montagestelle wird am jeweiligen Ende dieser Montagestelle eine Vorrichtung 1 angelegt. Im folgenden wird lediglich das Anlegen und die Funktion einer Vorrichtung beschrieben. Um die Rohrleitung herum werden vier Halbschalen 3 und 4, 5 und 6 jeweils paarweise angelegt und durch geeignete, nicht dargestellte Spannmittel jeweils miteinander verbunden.

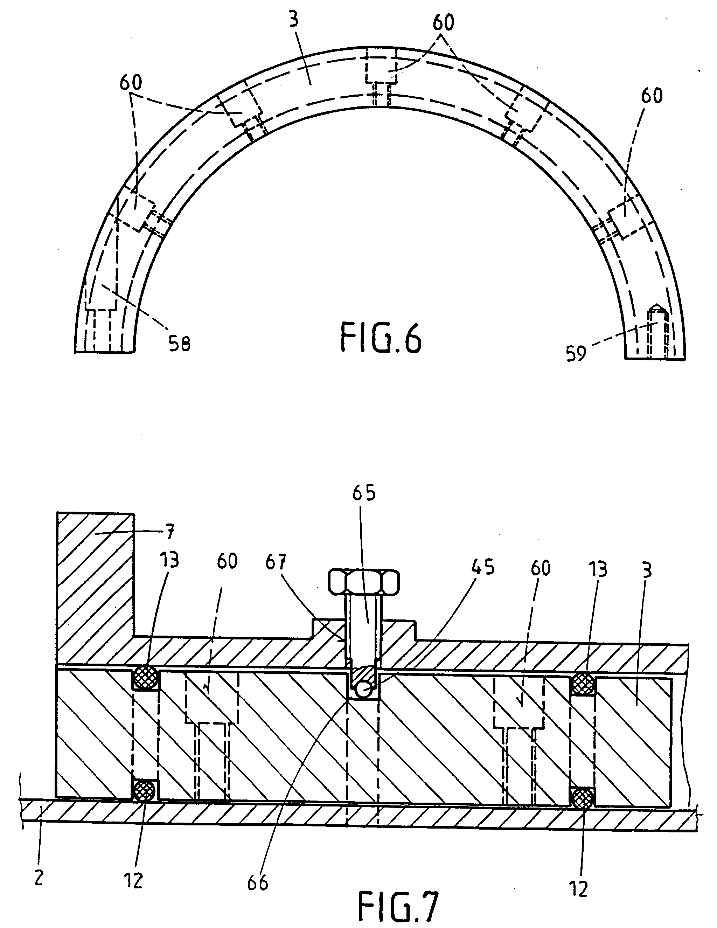

Das Verspannen der Halbschalen 3 bis 6 kann beispieslweise durch nichtdargestellte Zylinderkopfschrauben erfolgen, wozu, wie in Fig. 6 dargetellt, entsprechende Schraubenbohrungen 58 und Gewindebohrungen 59 vorgesehen sein können. Die kraftschlüssige Verbindung der Halbschalen 3 bis 6 mit der Rohrleitung 2 erfolgt durch nicht dargestellte Klemmschrauben, wofür ebenfalls geeignete Bohrungen 60 in den Halbschalen vorgesehen sind. Über die Halbschalen 3 bis 6 werden ein Schleusenoberteil 7 und Schleusenunterteile 8 und 9 gelegt. Der äußere Abstand der Halbschalen 3,4 und 5,6 ist dabei etwas geringer bemessen, als es der Länge des Schleusenoberteils 7 bzw. der Gesamtlänge der Schleusenunterteile 8 und 9 entspricht.

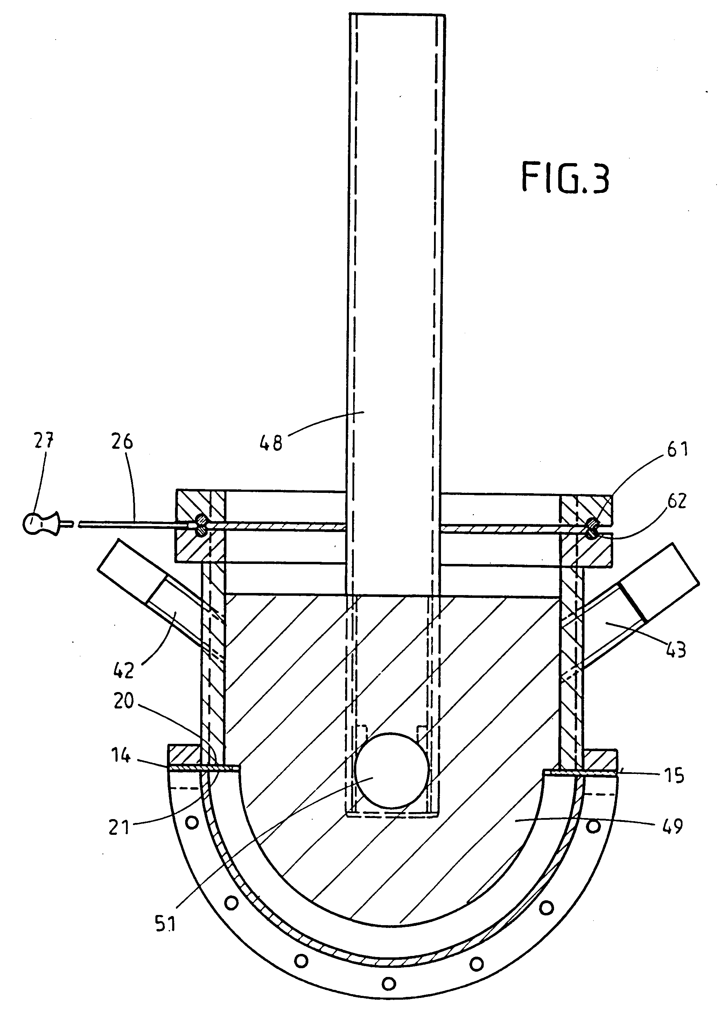

Zur Abdichtung gegen die Rohrleitung bzw. zum Schleusenoberteil 7 und zu den Schleusenunterteilen 8 und 9 weisen die Halbschalen 3,4 und 5,6 jeweils gemeinsame innere 0-Ringe 12 und gemeinsame äußere O-Ringe 13 auf. Die untere Halbschale 8 weist an ihrer inneren Stirnseite 16 einen Nut 17 auf, in die eine Nase 18 einer inneren Stirnfläche 19 der unteren Halbschale 9 eingreift. Nase 19 und Nut 17 sind gegeneinander durch geeignete Dichtmittel abgedichtet. Das Schleusenoberteil 7 und die Schleusenunterteile 8 und 9 werden durch geeignete, nicht dargestellte Spannmittel miteinander verbunden, wobei, wie aus Fig. 3 erkennbar, eine Stoßkante 20 des Schleusenobereils 7 gegen die Stoßkante 21 der Schleusenunterteile 8 und 9 durch Dichtungen 14,15 abgedichtet ist.

Um ein seitliches Verschieben des Schleusenoberteils 7 und der Schleusenunterteile 8 und 9 zu ermöglichen, sind diese durch geeignete Sicherungen 10, wie Klammern, mit Klemmschrauben 22 mit den Halbschalen 3 bis 6 verbunden. Obwohl in Fig. 1 nur eine Sicherung 10 dargestellt ist, wird es vorteilhaft sein, jeweils mindestens eine Sicherung 10 pro Halbschale 3 bis 6 vorzusehen. Druckschrauben 23 in der Sicherung 10 dienen dazu, wie weiter unten erläutert wird, den Schleusenkörper 1 gegen die Halbschalen 3 bis 6 zu verschieben.

In dem Schleusenoberteil 7 befindet sich ein Schleusenkörper 24. Der Schleusenkörper 24 weist eine Schleusenkammer 25 auf, die vorteilhafterweise senkrecht zur Achse der Rohrleitung angeordnet ist. Die Schleusenkammer 25 weist einen Querschnitt auf, der mindestens so groß ist, wie der Querschnitt der Rohrleitung. Verschließbar ist die Schleusenkammer 25 durch einen in Fig. 3 nur angedeuteten Schieber 26 mit Handgriff 27. Der Schleusenkörper 24 weist ferner einen Anschlußflansch 28 auf, der den einfachen und schnellen Anschluß von weiteren Mitteln zum Durchführen des erfindungsgemäßen Verfahrens ermöglicht.

Der Schleusenkörper 24 und der Anschlußflansch 28 sind gegeneinander durch 0-Ringe 61,62 abgedichtet; zum Verschließen wird der Schieber 26 zwischen den 0-Ringen 61,62 hindurchgeführt.

Entgegen den bisher bekannten Verfahren zum Trennen und Verbinden von Rohrleitungen , wie Gasrohrleitungen, unter Betriebsbedingen, wird die Rohrleitung 2 zunächst einmal durchtrennt. Dazu wird ein Flansch 29 einer Trennvorrichtung 11 auf den Flansch 28 des Schleusenkörpers 24 aufgesetzt und mit diesem verbunden. An einem den Flansch 29 entgegengesetzten Ende befindet sich ein Anschluß 30, durch den geeignete Mittel zum Durchtrennen der Rohrleitung durch den Flansch 29 der Trennvorrichtung 11 in die Schleusenkammer 25 des Schleusenkörpers 24 verbracht werden können. Das Mittel zum Durchtrennen der Rohrleitung 2 kann eine in Fig. 1 dargestellte Fräsvorrichtung 31 sein.

Es ist aber auch möglich, Schweißgeräte in die Trennvorrichtung zu integrieren. Die Fräsvorrichtung 31 weist einen Mantel 32 auf, dessen Durchmesser dem Innendurchmesser des Flansches 29 entspricht. Gegen den Flansch wird der Mantel 32 durch 0-Ringe 33,34 abgedichtet. Innerhalb des Mantels 32 befindet sich eine Antriebswelle 35, die in Kugellagern 36,37 gelagert ist. An ihrem der Rohrleitung 2 zugewandten Ende weist die Antriebswelle 25 einen zum Durchtrennen der Rohrleitung 2 geeigneten Fräskopf 38 auf. Das entgegengesetzte Ende der Antriebswelle 25 bildet einen Zapfen 39, der mit einem geeigneten, nicht dargestellten Antriebsgerät verbunden werden kann. Zur Sicherung der Fräsvorrichtung 31 mi dem Flansch 29 wird eine Kappe 40 über den Flansch 29 verbracht und mit diesem verschraubt. Zu diesem Zweck weist der Flansch 29, ebenso wie die Kappe 40, ein Gewinde 41 auf. Wenn die Kappe 40 mit dem Flansch 29 verschraubt ist, ragt lediglich der Zapfen 39 aus der Kappe 40 hervor. Zur Verhinderung vertikaler Bewegungen der Antriebswelle 35 ist diese gegen die Kappe 40 durch Sprengringe 63,64 gesichert.

Handelt es sich bei der zu durchtrennenden Rohrleitung 2 um eine Gasleitung, so wird vor dem Durchtrennen der Rohrleitung 2 der in der Schleusenkammer 25 befindliche Sauerstoff abgesaugt bzw. ausgeblasen. Zu diesem Zweck befinden sich seitlich am Schleusenkörper 24 Anschlüsse 42,43 (Fig.3), deren Öffnungen 44 (Fig.1) in die Schleusenkammer 25 münden. Die Anschlüsse 42,43 können durch nicht dargestellte Kugelhähne verschlossen werden.

Zum Durchtrennen der Rohrleitung 2 wird die Fräsvorrichtung 31 durch eine nicht dargestellte Antriebsmaschine ingang gebracht und um 360 Grad radial um die Halbschalen 3 bis 6 bewegt. Es ist dazu nötig, den gesamten Schleusenkörper 1 um die Halbschalen 3 bis 6 herumzudrehen. Um dies zu erleichtern und um ein seitliches Verrutschen der Vorrichtung 1 bei diesem Arbeitsschritt zu vermeiden, können in die Halbschalen 3 bis 6 Räder 45 integriert sein, die durch eine Führungs- und Distanz-Schraube 65 justiert werden. Zur Aufnahme der Räder 45 (wobei die Räder 45 auch eine Kugelform haben können) weisen die Halbschalen 3 bis 6 jeweils eine radiale Vertiefung in Form einer Nut 66 auf. Die Führungs- und Distanz-Schraube 65, die in einer Gewindebohrung 67 des Schleusenkörperoberteils 7 bzw. Schleusenkörperunterteile 8 und 9 geführt wird, ragt mit ihrem unteren Ende in die Nut 66 der Halbschalen 3 bis 6 hinein und ermöglicht die Einstellung des Anpreßdruckes auf die Räder 45. Gleichzeitig verhindert die Schraube 65 ein Verschieben der Vorrichtung 1 in Längsrichtung. Diese oben beschriebene Anordnung läßt sich der Fig. 7 entnehmen.

Nach dem Durchtrennen der Rohrleitung 2 wird die Fräsvorrichtung 31 angehoben und die Schleusenkammer 25 durch den Schieber 26 verschlossen. Danach wird der Flansch 29 der Fräsvorrichtung 31 von dem Flansch 28 des Schleusenkörpers 24 gelöst und die Fräsvorrichtung 31 um 180 Grad gewendet. Da die Achse 35 der Fräsvorrichtung 31 zur Mittelachse der Schleusenkammer 25 versetzt ist, kann durch das Verdrehen der Fräsvorrichtung 31 um 180 Grad und durch erneutes Ansetzen der Fräsvorrichtung und erneutes Durchtrennen der Rohrleitung 2 ein relativ breiter Materialring durch die beiden Frässchritte aus der Rohrleitung 2 herausgetrennt werden.

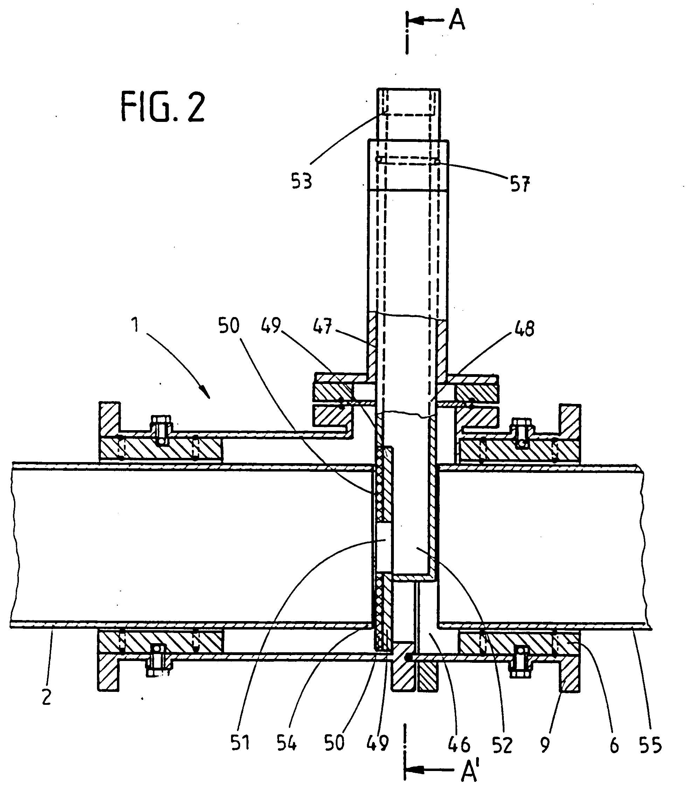

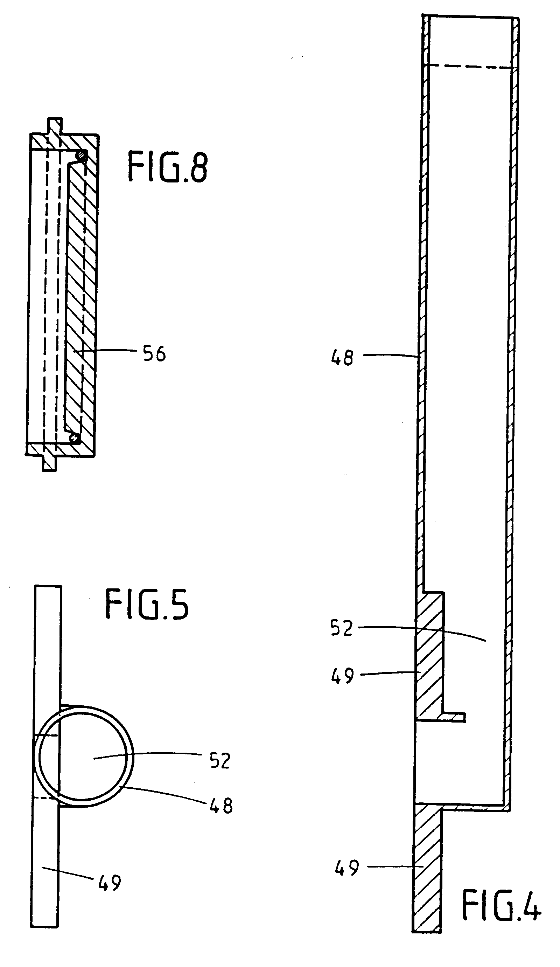

Nachdem die Fräsvorrichtung 31 erneut angehoben und die Schleusenkammer 25 durch das Schleusenblech 26 verschlossen wurde, kann durch Aufsetzen einer nicht dargestellten Schleusenglocke auf die Schleusenkammer der (ebenfalls nicht dargestellte) Materialring und eventuelle Späne aus der Vorrichtung 1 entfernt werden. Durch das Entfernen des Materialrings und der Späne entsteht eine ausreichend große Montagelücke 46 (Fig.2), die für die weiteren Schritte nötig ist. Nach Entfernen des Materialrings wird eine weitere Schleusenglocke 47 auf den Anschlußflansch 28 des Schleusenkörpers 24 aufgesetzt und mit diesem durch nicht dargestellte Befestigungsmittel verbunden. In der Schleusenglocke 47 wird ein in den Figuren 2 bis 5 dargesteller Führungskopf 48 geführt, der gegen die Schleusenglocke 47 durch geeignete Dichtmittel, wie O-Ringe 57, abgedichtet ist. Der im wesentlichen hohlzylindrische Führungskopf 48 weist an seinem unteren Ende eine Absperrscheibe 49 auf. Die Absperrscheibe 49 ist auf ihrer gesamten, dem zu sperrenden Ende der Rohrleitung 2 zugewandten, Fläche mit einer geeigneten Dichtung 50 versehen. In ihrem Zentrum weist die Absperrscheibe 49 eine Öffnung 51 auf, die in einem Hohlraum 52 des Führungskopfes 48 mündet.

Der Führungskopf 48 ist an seinem anderen Ende mit einem Bypass-Anschluß 53 versehen. Dieser dient zur Aufnahme einer nicht dargestellten Bypass-Leitung. Bevor die Absperrscheibe 59 in die in Fig. 2 dargestellte Lage gedrück wird, wird eine Bypass-Leitung an den Bypass-Anschluß 53 angeschlossen und mit dem Bypass-Anschluß einer zweiten, nicht dargestellten Vorrichtung (die gegenüber der in Fig. 1 und Fig. 2 dargestellten Vorrichtung 1 in Horizontalebene um 180 Grad verdreht ist) verbunden. Durch diese Maßnahme läßt sich einfach und schnell ein Bypass herstellen, ohne die Rohrleitung 2 an anderer Stelle als der Montagelücke 46 anbohren zu müssen.

Nachdem der Bypass hergestellt ist, wird der Führungskopf 48 in die in Fig. 2 dargestellte Lage gedrückt. Um eine vollständige Abdichtung der Rohrleitung 2 durch die Absperrscheibe 49 zu ermöglichen, muß die Absperrscheibe 49 mit der Dichtung 50 gegen eine durch den vorangegangenen Frässchritt entstandene Schnittkante 54 gepreßt werden. Zu diesem Zweck werden zunächst die Führungs- und Distanzschrauben 65 gelöst. Anschließend werden die Druckschrauben 23 der Sicherungen 10 angezogen bzw. gelöst, wodurch sich die Vorrichtung 1 in Längsrichtung verschiebt und die Absperrscheibe 49 gegen die Schnittkante 54 der Rohrleitung 2 gepreßt wird. Vorteilhafterweise sind zur Längsverschiebung der Vorrichtung 1 die Halbschalen in Achsrichtung der Rohrleitung 2 kürzer dimensioniert als in Fig. 1 und 2 dargestellt, so daß das Schleusenoberteil 7 bzw. die Schleusenunterteile 8 und 9 über die äußeren Ränder der Halbschalen 3 bis 6 des Schleusenoberteils 7 bzw. der Schleusenunterteile 8 und 9 überstehen. Je nach Größe des Überstandes über die Halbschalen 3 bis 6 läßt sich eine entsprechende Verschiebung der Vorrichtung 1 ermöglichen.

Die Dichtung 50 der Absperrscheibe 49 dichtet nunmehr die Rohrleitung 2 vollständig ab, da durch die saubere Schnittkante 54 an der Rohrleitung 2 Unebenheiten, wie sie durch Ablagerungen oder Korrosion sonst im Inneren der Rohrleitung 2 auftauchen, hierbei eine vollständige Abdichtung nicht verhindern können.

Sind beide Enden der Rohrleitung 2 durch die Absperrscheibe 49 der jeweiligen Vorrichtung 1 vollständig verschlossen, kann die Sicherung 10 (in Fig. 2 nicht dargestellt) von der Halbschale 6 und dem Schleusenunterteil 9 entfernt werden, woraufhin das Schleusenunterteil 9 und ein zu entfernendes Rohrleitungsstück 55 abgenommen werden können. Nach Entfernen des Rohrleitungsstücks 55 kann ein nicht dargestelltes Montagestück, wie eine Abzweigungsleitung, in die Vorrichtung 1 eingesetzt werden. Die Halbschale 6 und das Unterteil 9 werden hiernach erneut montiert und durch die Sicherung 10 befestigt.

Es ist auch möglich, ein sogenanntes Formstück oder U-Stück (Überschieber) einzusetzen. Derartige Formstücke, wie sie beispielsweise von der Firma SCHUK geliefert werden, weisen an ihren jeweiligen Enden eine radial verlaufende Sicke auf, in der sich ein Rollgummi befindet. Dieses Formstück kann mit Hilfe einer nicht dargestellten Sicherung, die gegenüber der Sicherung 10 andere Abmessungen aufweist und der Spannschraube 23 zur Rohrleitung 2 hin bewegt werden. Nachdem die Lage dieses Formstücks festgelegt ist (die korrekte Lage des Formstückes kann durch die Schleusenglocke beobachtet werden), kann das Formstück mit der Rohrleitung 2 verschweißt werden. Derartige Formstücke sind bei der Überbrückung von Trennstellen in Rohrleitungen üblich.

Vor dem Ansetzen des Überschiebers bzw. nach dem Einsetzen des Montagestücks wird der Führungskopf 48 aus der Schleusenglocke 47 herausgezogen und der Schleusenkörper 24 durch das Schleusenblech 26 verschlossen. Nach Absaugen oder Ausblasen von Sauerstoff aus der Schleusenkammer 25 können nun nicht dargestellte Schweißgeräte an die Anschlüsse 42,43 befestigt und die Rohrleitung 2 mit dem Montagestück, beispielsweise eine Abzweigleitung, durch Schweißung miteinander verbunden werden.

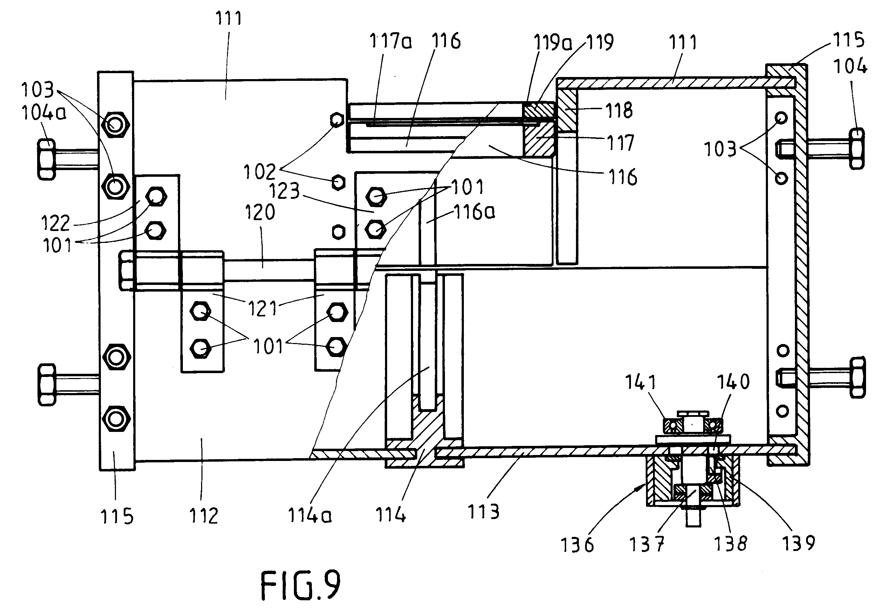

Soll die Rohrleitung 2 lediglich verschlossen werden, kann auch eine Verschlußkappe 56 (Fig. 8) in die Vorrichtung 1 verbracht werden und durch Schweißmittel mit der Rohrleitung 2 verbunden werden.

Auf die vorbeschriebene Weise wird ein Verfahren und eine Vorrichtung zum Durchführen des Verfahrens geschaffen, mit dem einfach, schnell und preiswert Rohrleitungen unter Betriebsbedingungen getrennt und verbunden werden können. Die Montagearbeiten können mit der vorbeschriebenen Vorrichtung auch auf engem Raum durchgeführt werden. Zu betonen ist, daß die Sicherheit durch vorliegendes Verfahren erheblich gesteigert werden kann, da durch die sauberen Schnittkanten der Rohrleitung, an denen die Abdichtung stattfindet, eine vollständige Abdichtung der Rohrleitung möglich ist. Es ist hierdurch auch nicht mehr nötig, daß die mit der Montage beschäftigten Personen den Arbeitsfluß behindernde Schutzvorrichtungen, wie Gasmasken, tragen müssen.

Das dargestellte Verfahren und die Vorrichtung zur Durchführung dieses Verfahrens sind daher ergonomisch günstig und erhöhen die Arbeitssicherheit.

Übliche Rohrleitungen, beispielsweise Gasleitungen, weisen einen Durchmesser von etwa 80 bis 1000 Millimeter auf, wobei das Gas durch diese Rohrleitungen mit einen Druck von 60 hPa (60 mb) bis 70.000 hPa (70 b) strömt. Die beschriebene Vorrichtung kann so ausgelegt sein, daß sie geeignet ist, mehrere Durchmesserbereiche von Rohrleitungen abzudecken, beispielsweise einen Bereich von 80 bis 150 Millimeter Durchmesser und einen Bereich von 200 bis 300 Millimeter Durchmesser der Rohrleitung, wobei die Vorrichtung vorteilhafterweise so ausgelegt ist, daß die Abdichtung einen Druck von etwa 60 HPa (60 mb) bis etwa 5 000 hPa (5 b) standhält. Es ist hierbei lediglich nötig, die Halbschalen entsprechend zu dimensionieren, so daß sie den korrekten Abstand zwischen Rohrleitung und Vorrichtung ermöglichen.

Nachfolgend wird ein weiteres Ausführungsbeispiel der erfindungsgemäßen Vorrichtung anhand weiterer Zeichnungen erläutert, in denen zeigt:
- Fig. 9: eine teilweise geschnittene Ansicht der Vorrichtung,

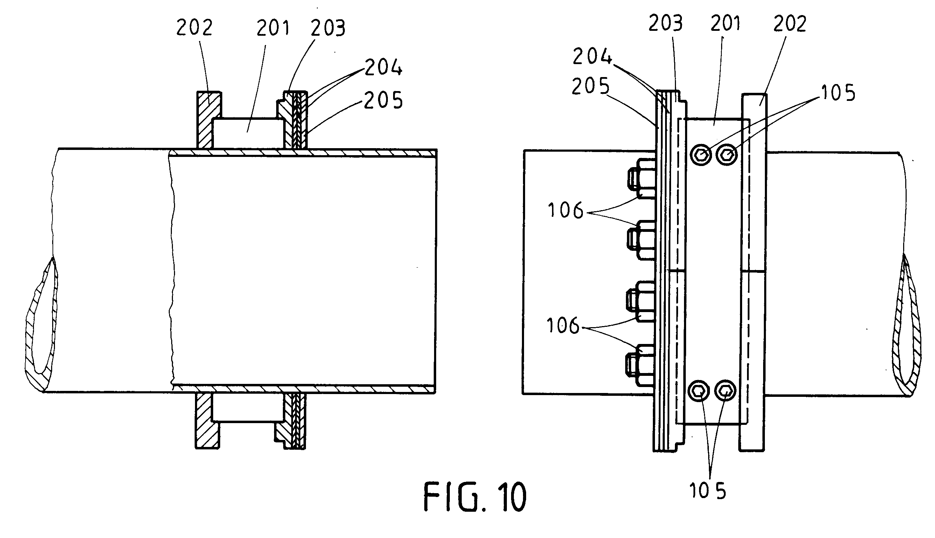

- Fig. 10: eine weitere Ansicht der Vorrichtung, teilweise im Schnitt und teilweise in Außenansicht,

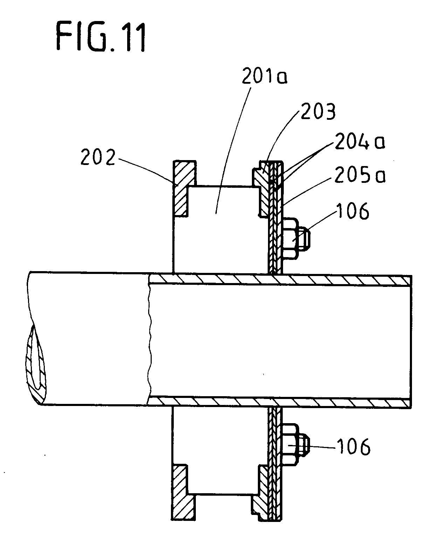

- Fig. 11: einen Schnitt der Vorrichtung, die auf eine Rohrleitung aufgesetzt ist,

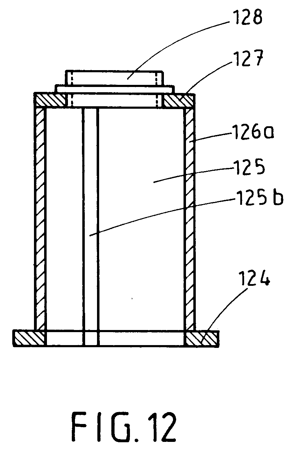

- Fig. 12: einen Schnitt der Schleusenglocke,

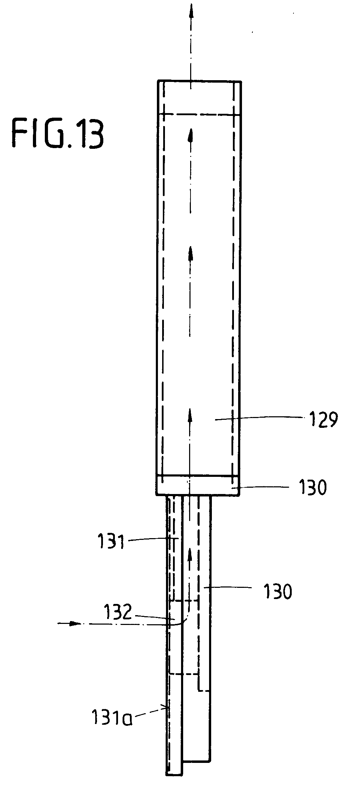

- Fig. 13: eine Seitenansicht des Teil des Bypasses bildenden Führungsrohres,

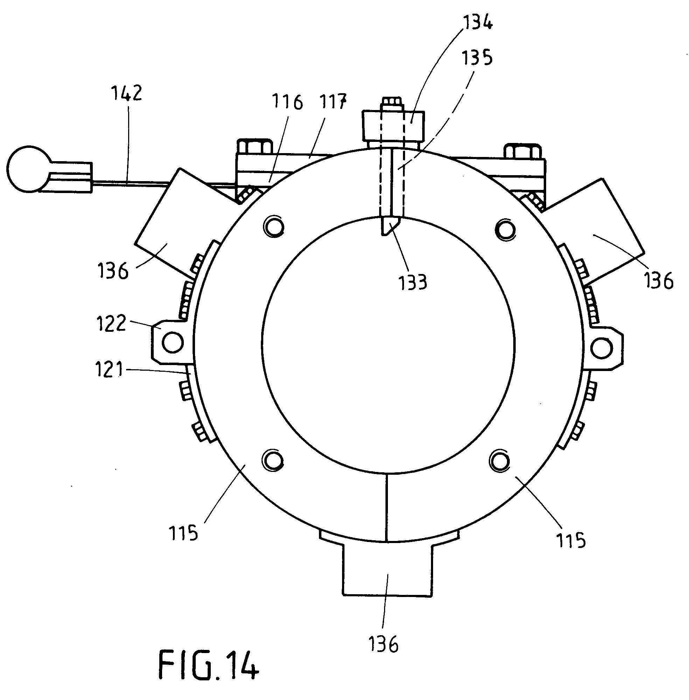

- Fig. 14: eine Stirnansicht der erfindungsgemäßen Vorrichtung,

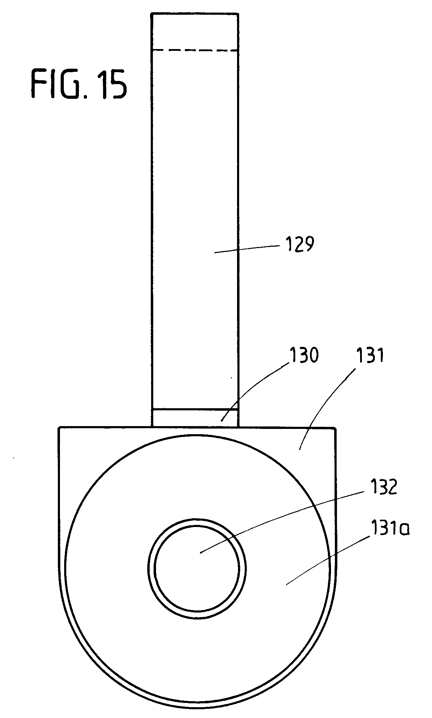

- Fig. 15: eine Stirnansicht des in Fig. 13 zeigten Bypasses,

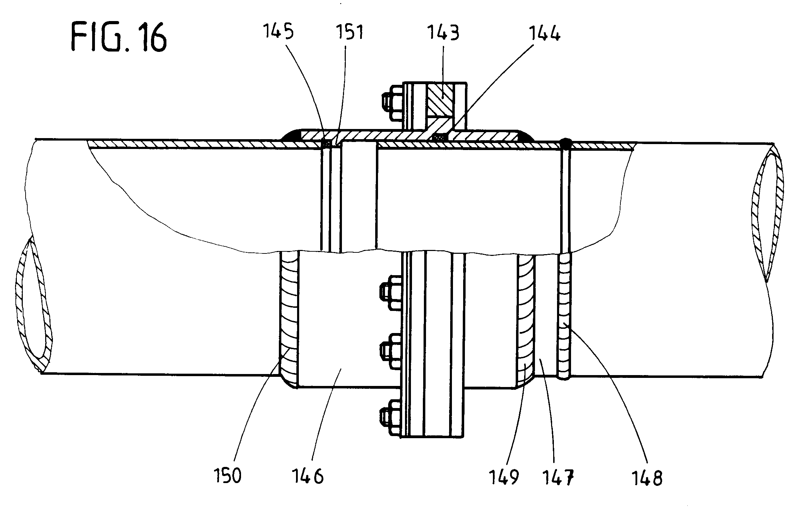

- Fig. 16: eine Ansicht der Rohrleitung nach Einsetzen der erneuerten Verbindung der voneinander getrennten Rohrleitungen,

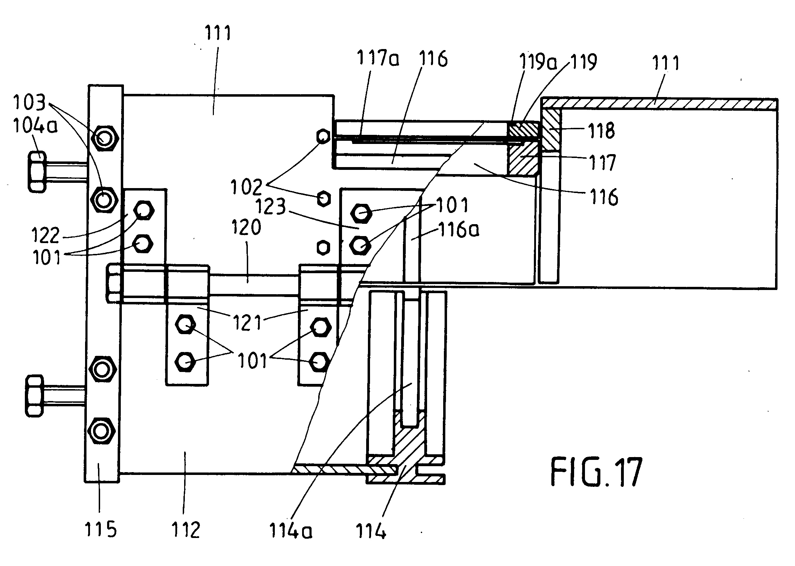

- Fig. 17: eine weitere geschnittene Teilansicht der erfindungsgemäßen Vorrichtung vor dem Anbringen der Schleusenglocke,

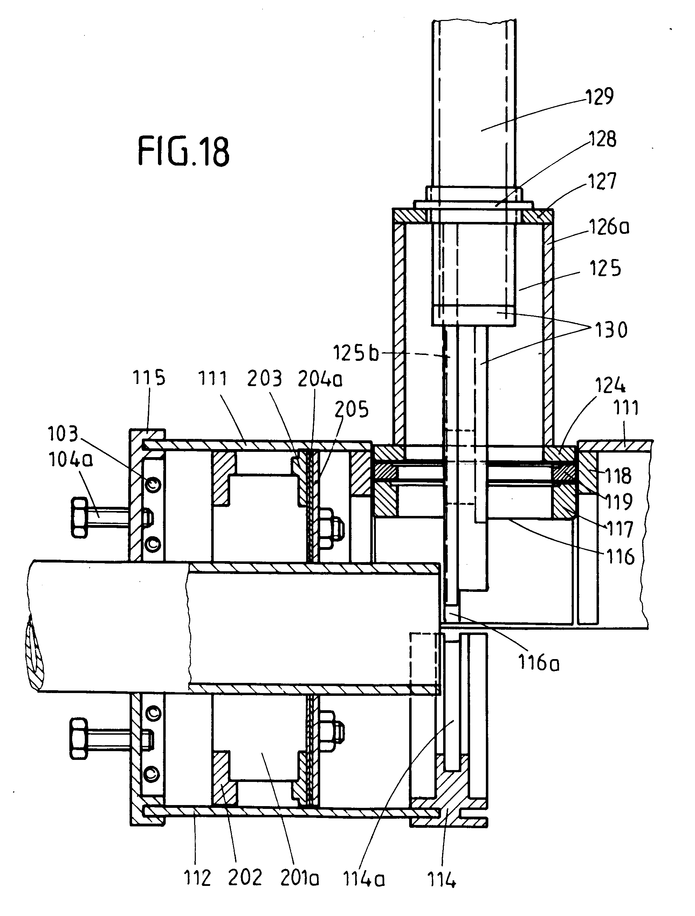

- Fig. 18: eine teilweise geschnittene Ansicht der Vorrichtung nach dem Einsetzen der Schleusenglocke,

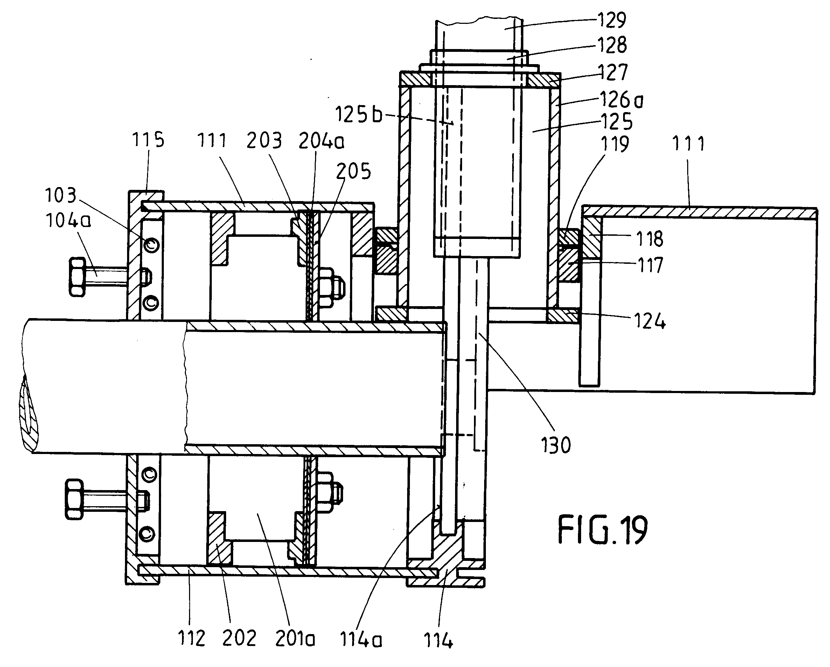

- Fig. 19: eine teilweise geschnittene Ansicht der Vorrichtung nach dem Einsetzen des Bypasses in die Betriebsposition,

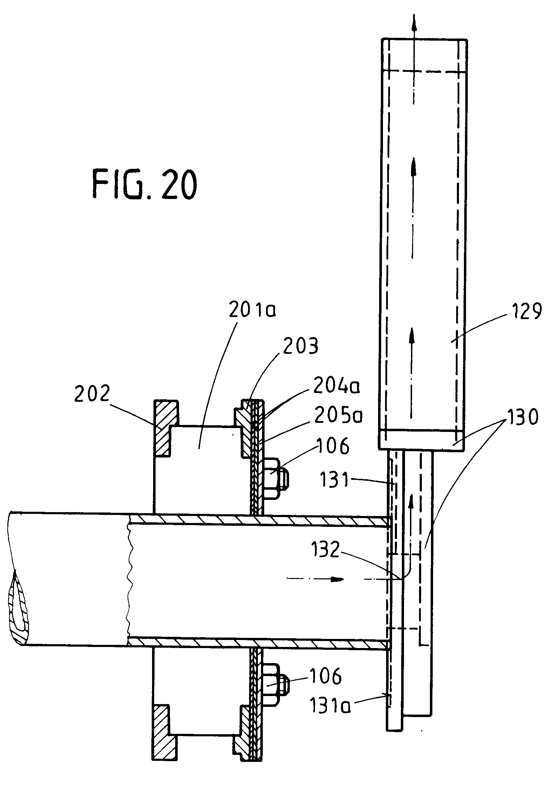

- Fig. 20: eine teilweise geschnittene Seitenansicht, woraus die Anordnung des Absperrteiles mit Bypass in der Betriebsposition erkennbar ist, und

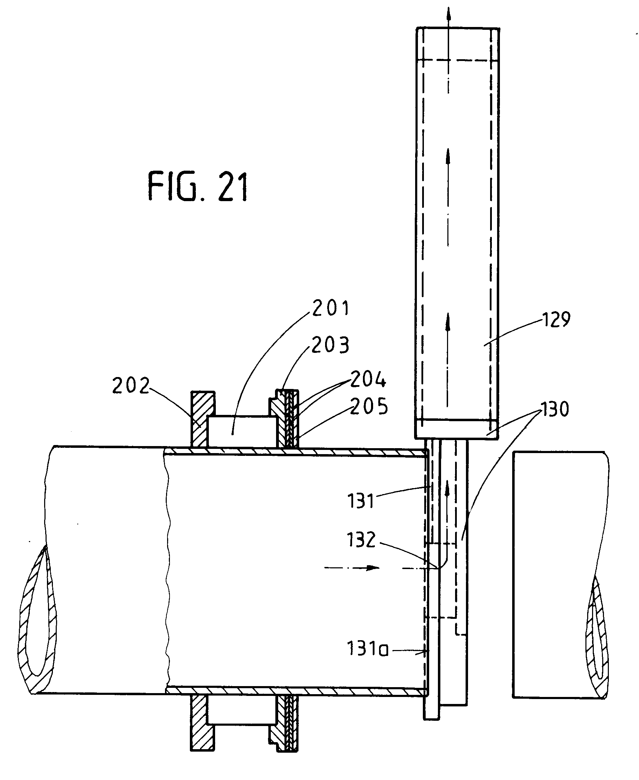

- Fig. 21: eine teilweise geschnittene Seitenansicht wie in Fig. 20, wobei die einander gegenüber liegenden Enden der unterbrochenen Rohrleitung zu erkennen sind.

Die in den Figuren 9 bis 21 dargestellte Vorrichtung weist einen nach außen abgedichteten zerlegbaren Druckzylinder auf, der auf eine Rohrleitung aufgesetzt werden kann und in dem die Rohrleitung getrennt, abgesperrt und wieder verbunden werden kann. Um Arbeiten im Inneren des Druckzylinders durchführen zu können, weist dieser einen Schleusenschacht 116, 117 mit Schleusenabsperrung 117, 177a, 117b, 142 auf. Mittels Schleusenglocken können Trenngeräte 133, 134, 135, Absperrgeräte 129, 130, 131, 131a und Wiederverbindungsgeräte 143 und Werkzeuge gefahrlos in den Druckzylinder eingebracht und aus diesem wieder entfernt werden.

Der nach beiden Enden offene Druckzylinder wird durch zwei Adapter an den offenen Enden durch Dichtungen 204 oder 204a abgedichtet. Der Druckzylinder läßt sich durch die Abdichtungen 204 oder 204a und deren Adapter um die Längsachse der Rohrleitung drehen und wird nahe den Enden jeweils auf zweimal drei Führungs- und Stützrollen 136 zentriert geführt.

Außerdem wird der Druckzylinder an seinen Stirnseiten mit Sicherungshalbringen 115 stabilisiert, die um 90 versetzt an Halbschalen 111, 112 und 113 des Druckzylinders montiert sind. Dadurch kann ein Schneidstahl 133 oder ein Nutenfräser 138 exakt geführt werden. Getrennt wird die Rohrleitung durch Drehen des Druckzylinders, wobei man den Schneidstahl 133 oder auch den Nutenfräser 138 langsam in die Rohrleitung schiebt. Durch Drehen des Trenngerätes um 180° kann ein zweiter Schnitt ausgeführt werden, wodurch ein Rohrstück aus der Rohrleitung herausgeschnitten wird.

Um das von den Trennwerkzeugen aus der Rohrleitung herausgeschnittene Rohrstück und die dabei anfallenden Späne zu entfernen, werden durch die Schleusenglocke mittels eines Rundstahls mit Haken und Magneten das Rohrstück und Späne entfernt.

Nun können eine Absperrscheibe 131, 131a mit einem Führungsrohr 129, 130 als Bypass durch die Schleusenglocke und einen Schleusenschacht 116, 117 in Führungsnuten 125b, 116a und 114a eingebracht werden. Bei Bedarf kann dann ein Bypass montiert werden.

Nachdem die Führungs- und Stützrollen 136 aus dem Führungsbereich der Adapter entfernt worden sind, können mittels Schrauben 104a der Druckzylinder mit Absperrscheibe fest gegen die Stirnseite des abzusperrenden Rohrendes gezogen werden. Danach kann durch Abbauen der Druckzylinderhalbschale 113 mit Sicherungshalbringen 115 das zu entfernende Rohr beziehungsweise Rohrstück ausgebaut werden.

Beim erneuten Verbinden der Rohrleitung steht ein Verbindungsformteil (Fig. 16) für schweißbare Rohre zur Verfügung. Das Verbindunsformteil besteht aus zwei Teilen, die sich ineinander verschieben lassen. Ein Führungsrohr 147 wird an das zu verbindende Rohrende angeschweißt und dient als Übergangsstück für in ihrer Toleranz schwankenden Rohre beziehungsweise Rohrenden, um für das Überschiebeteil mit der Seite eines 0-Ringes 144 eine saubere Führung und Dichtfläche zu gewährleisten. Für das Verbindungsformteil (Fig. 16) steht ein Adapter zur Verfügung, der auf dem Überschiebeteil montiert ist und zusammen mit dem Rohr und dem Verbindungsformteil von unten in den Druckzylinder eingebracht wird. Sodann wird mit der Halbschale und den Sicherungshalbringen 115 des Druckzylinders dieser wieder nach außen gasdicht verschlossen.

Nach Begasung beziehungsweise Freigabe der erneuerten Rohrleitung werden die Schrauben 104a gelöst und der Bypass entfernt. Sodann wird die Absperrscheibe 131 in der Schleusenglocke gezogen. Nach Schließen des Schleusenschachtes 117, 117a mittels eines Absperrbleches 142 kann die Schleusenglocke (Fig. 12) zusammen mit der Absperrscheibe demontiert werden.

Nun wird ein Überschiebeteil 146 mittels eines Adapters 143 durch die Schrauben 104 und 104a um etwa 2 cm über das zuvor noch abgesperrte Rohr gezogen, wodurch die Stirnseite des Rohres gegen einen Keildichtungsring 145 gestützt und durch eine Dichtkante 151 gepreßt wird.

Nach Überprüfung des Überschiebeteils 146 auf Dichtigkeit wird auf der Seite des 0-Ringes 144 die Stirnseite des Überschiebeteils 146 für eine Kehlnaht mindestens drei mal auf Länge von 2 cm am Führungsrohr 147 abgeheftet.

Nachdem der Druckzylinder (Fig. 9, 14 und 17) mit Stickstoff gespült wurde, kann die Stirnseite des Überschiebeteils 146 mit dem Dichtungskeilring 145 durch den Schleusenschacht am Rohr für eine Kehlnaht mit mindestens 4 cm Länge abgeheftet werden.

Sodann kann die gesamte Vorrichtung demontiert werden. Sowie die Vorrichtung gesäubert wurde und deren Dichtungen überprüft worden sind, ist sie wieder voll einsatzbereit.

Vorstehend ist die Arbeitsweise an einem Ende der unterbrochenen Rohrleitung beschrieben worden. Beim Arbeiten mit einem Bypass werden stets zwei der hier beschriebenen Vorrichtungen mit zwei Verbindungsformteilen eingesetzt.

Gemäß der Erfindung können alle Arbeiten an Rohrleitungen wie Trennungen, Absperrungen mit Bypass und Wiedereinbindungen durchgeführt werden. Mit dem nach außen geschlossenen System beziehungsweise der nach außen geschlossenen Vorrichtung können Arbeiten an Rohrleitungen unter Betriebsdruck durchgeführt werden. Alle Teile der Vorrichtung sind wiederverwendbar. Es können alle gebräuchlichen Rohrleitungen unter Betriebsdruck mit der Vorrichtung getrennt, abgesperrt und wieder verbunden werden. Die ein handliches Gerät bildende Vorrichtung kann bis Nennweiten der Rohrleitungen von 600 mm von Hand betätigt werden.

Die Vorrichtung ist für die gebräuchlichen Rohrleitungen aus Asbest, Beton, Gußeisen, PE, PVC, Stahl, PE-ummanteltes Stahl- und Gußrohr geeignet. Die Rohrleitungen können alle gasförmigen und flüssigen Stoffe bis ca. 110°C führen, das heißt die Vorrichtung ist für die Bearbeitung derartige Medien führenden Rohrleitungen unter Betriebsdruck geeignet. Die Betriebsdrücke können von 0 bis 70 Bar reichen. Die Nennweite der zu bearbeitenden Rohrleitungen kann zwischen 80 und 1000 mm liegen.

### Liste der Bezugszeichen zu Fig. 9 bis 21

10 *1.) M-Schrauben*
10 *2.) Imbusschrauben*
10 *3.) M-Schrauben*
10 *4.) M-Schrauben*
10 *5.) Imbusschrauben*
10 *6.) Imbusschrauben mit Muttern*
*7.)*
*8.)*
*9.)*
*10.)*
1 *11.) obere Druckzylinderhalbschale mit Schleusenöffnung*
1 *12.) untere Druckzylinderhalbschale*
1 *13.) untere Druckzylinderhalbschale*
1 *14.) Führungs u.Stabilisierungshalbring*
1 *14.)a Führungsnute*
1 *15.)Stabilisierungshalbringe*
1 *16) Schleusenschachtseitenwand*
1 *16.)a Führungsnuten*
1 *17.) Schleusenabsperrung Unterteil*
1 *17.)a Aufnahmeschlitz für Absperrblech 42*
1 *17.)b O-Ringe*
1 *18.)Schleusenschachtstabilisierungsringe*
1 *19.) Schleusenabsperrung Oberteil*
1 *19.)a O-Ring*
1 *20.) Befestigungsstange kurz*
1 *20.)a Befestigungsstange lang*
1 *21.) Befestigungslasche mit Bohrung 12mm*
1 *22.) Befestigungslasche mit Bohrung 14mm*
1 *23.) Zentrallasche mit Gewinde M10*
1 *24.) Schleusenglockenbefestigungsflansch*
1 *25.) Schleusenglockenseitenblech mit Führungsnute*
1 *26.) Schleusenglockenseitenblech*
1 *27.) Schleusenglockenoberteil mit Bohrung*
1 *28.) Abdichtring für Führungsrohr der Absperrscheibe*
1 *28.)a Abdichtring für Montagewerkzeug*
1 *29.)Führungsrohr u. Bypass*
1 *30.) Anschluß stück für Führungsrohr zur Absperrscheibe*
1 *31.) Absperrscheibe mit Bohrung*
1 *31.)a Flachdichtung 3mm Für Absperrscheibe*
1 *32.) Befestigungsblech für Schneidwerkzeuge*
1 *33.) Trennwerkzeug*
1 *34.) Schraubkappe zum Vortrieb für Schneidwerkzeuge*
1 *35.) Zylinder für Schneidwerkzeugbefestigung*
1 *36.) Befestigungsvorrichtung für Führungs-u.Stützrollen*
1 *37.) Stützrollenscheibenwelle*
1 *38.) Schräglaufkugellager*
1 *39.) Lageraufnahmejustierhohlzylinder*
1 *40.) Schräglaufrollenlager*
1 *41.) Laufrollenlager*
1 *42.) Schleusenschachtabsperrblech*
1 *43.) Adapter für Verbindungsformteil*
1 *44.) O-Ring für Verbindungsformteil*
1 *45.) Keildichtungsring für Verbindungsformteil*
1 *46.) Überschiebteil*
1 *47.) Führungsleitungsrohr*
1 *48.) V-Naht Führungsrohr an Rohrleitung*
1 *49.) Kehlnaht an Führungsrohr*
1 *50.) Kehlnaht an Rohrleitung*
1 *51.) Dichtkante*

### Adapter Bezugszeichen

2 *01.) Übergangsklemmhalbschalen*
2 *01.)a Übergangsklemmhalbschalen*
2 *02.) Stütz- u.Führungshalbringe*
2 *03.) Führungshalbringe*
2 *04.) Flachdichtung 2mm*
2 *04.)a Flachdichtung 2mm*
2 *05.) Dichtungsstützungsblech*
2 *05.)a Dichtungsstützungsblech*

## Patentansprüche

1. Verfahren zum Trennen und Verbinden von Rohrleitungen unter Betriebsbedingungen, bei dem eine Rohrleitung (2) an zwei voneinander entfernten Stellen unter Sauerstoffausschluß durchtrennt, über die Trennstellen (46) ein Bypass (53) angeordnet, die Rohrleitung an den Trennstellen (54) abgedichtet, wobei die Abdichtungen (49) den Fluß von Strömungsgut der Rohrleitung (2) durch den Bypass ermöglichen, und anschließend unter Sauerstoffausschluß jede Trennstelle (46) geschlossen wird.

2. Vorrichtung zum Durchführen des Verfahrens nach Anspruch 1, mit einem eine Schleusenkammer (25) enthaltenden Schleusenkörper (24), der die Rohrleitung (2) im zu bearbeitenden Bereich dichtend umschließt, **dadurch gekennzeichnet,** daß der Schleusenkörper aus einem Oberteil (7) und zwei Unterteilen (8 und 9) besteht, die lösbar mit Halbschalen (3 bis 6) zu verbinden sind, wobei die Halbschlaen (3 bis 6) kraftschlüssig auf der Rohrleitung (2) zu befestigen sind, und daß an den Schleusenkörper eine Bypass-Leitung (53) angeschlossen ist.

3. Vorrichtung nach Anspruch 2, dadurch gekennzeichnet, daß die Halbschalen (3 bis 6) durch Sicherungen (10) mit dem Schleusenoberteil (7) und den Schleusenunterteilen (8 und 9) zu verbinden sind.

4. Vorrichtung nach Anspruch 2 oder 3, dadurch gekennzeichnet, daß das eine Schleusenunterteil (8) lösbar mit dem anderen Schleusenunterteil (9) zu verbinden ist.

5. Vorrichtung nach einem der Ansprüche 2 bis 4, dadurch gekennzeichnet, daß sie als Trennvorrichtung (11) eine Fräsvorrichtung (31) aufweist.

6. Vorrichtung nach einem der Ansprüche 2 bis 5, dadurch gekennzeichnet, daß der Schleusenkörper (24) des Schleusenoberteils (7) einen Flansch (28) zur Aufnahme einer Schleusenglocke (29;47) aufweist.

7. Vorrichtung nach Anspruch 6, dadurch gekennzeichnet, daß die Schleusenglocke (29) eine Trennvorrichtung (11) aufweist.

8. Vorrichtung nach Anspruch 6 oder 7, dadurch gekennzeichnet, daß die Schleusenglocke (47) einen Führungskopf (48) aufweist.

9. Vorrichtung nach Anspruch 8, dadurch gekennzeichnet, daß der Führungskopf (48) hohlzylindrisch ist und an einem Ende eine Absperrscheibe (49) mit einer Dichtung (50) aufweist, wobei die Absperrscheibe (49) eine in einen Hohlraum (52) des Führungskopfes (48) mündende Öffnung (51) aufweist.

10. Vorrichtung nach Anspruch 8 oder 9, dadurch gekennzeichnet, daß der Führungskopf (48) an seinem der Absperrscheibe (49) entgegengesetzten Ende einen Bypass-Anschluß (47) aufweist.

11. Vorrichtung nach einem der Ansprüche 2 bis 10, dadurch gekennzeichnet, daß die Schleusenkammer (25) durch einen Schieber (26) verschließbar ist.

12. Vorrichtung nach einem der Ansprüche 2 bis 11, dadurch gekennzeichnet, daß der Schleusenkörper (1) um die Achse der Rohrleitung (2) schwenkbar ist.

13. Vorrichtung nach einem der Ansprüche 2 bis 12, dadurch gekennzeichnet, daß der Schleusenkörper (1) parallel zur Achse der Rohrleitung (2) verschiebbar ist.
